(19) Europäisches Patentamt
European Patent Office
Office européen des brevets

(11) **EP 2 675 223 A1**

(12) **EUROPEAN PATENT APPLICATION**
published in accordance with Art. 153(4) EPC

(43) Date of publication:
**18.12.2013  Bulletin 2013/51**

(51) Int Cl.:
**H04W 52/04** *(2009.01)*    **H04W 52/24** *(2009.01)*

(21) Application number: **12768138.5**

(22) Date of filing: **31.03.2012**

(86) International application number:
**PCT/CN2012/073370**

(87) International publication number:
**WO 2012/136122 (11.10.2012 Gazette 2012/41)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **07.04.2011   CN 201110086878**

(71) Applicant: **Huawei Technologies Co., Ltd.
Shenzhen, Guangdong 518129 (CN)**

(72) Inventors:
 • **DENG, Tianle
   Shenzhen
   Guangdong 518129 (CN)**

 • **TANG, Binsong
   Shenzhen
   Guangdong 518129 (CN)**
 • **LUO, Haiyan
   Shenzhen
   Guangdong 518129 (CN)**

(74) Representative: **Isarpatent
Patent- und Rechtsanwälte
Friedrichstrasse 31
80801 München (DE)**

(54)    **POWER ADJUSTMENT METHOD AND BASE STATION**

(57)    Embodiments of the present invention provide a power tuning method and a base station. The power tuning method includes: determining, by a first base station, power tuning information of a second cell according to a signal quality threshold and signal quality information of radio resources of the second cell; and sending, by the first base station, the power tuning information of the second cell to a second base station, so that the second base station tunes transmitted power of the radio resources of the second cell according to the power tuning information; where, the second cell is a neighboring cell of a first cell, the first cell is controlled by the first base station, and the second cell is controlled by the second base station. The embodiments of the present invention may realize dynamic tuning of transmitted power of radio resources and further reduce the waste of radio resources while reducing interference on neighboring cells.

A first base station determines power tuning information of the second cell according to a signal quality threshold and signal quality information of radio resources of the second cell — 101

The first base station sends the power tuning information of the second cell to the second base station, so that the second base station tunes transmitted power of the radio resources of the second cell according to the power tuning information — 102

FIG. 1

EP 2 675 223 A1

## Description

This application claims priority to Chinese Patent Application No. CN 201110086878.8, filed with the Chinese Patent Office on April 7, 2011 and entitled "POWER TUNING METHOD AND BASE STATION", which is incorporated herein by reference in its entirety.

## TECHNICAL FIELD

Embodiments of the present invention relate to the field of communication technologies, and in particular, to a power tuning method and a base station.

## BACKGROUND

The Third Generation Partnership Project (Third Generation Partnership Project, 3GPP) adopts inter-cell interference coordination (Inter-Cell Interference Coordination, ICIC) interference coordination mechanism in the time domain. The inter-cell interference coordination mechanism, by sending an almost blank subframe (Almost Blank Subframe, ABS) to a user equipment (User Equipment, UE), solves the problem of control channel interference when large and small base stations are mixed in deployment, in which case, no data is transmitted in the ABS, which means the ABS can only be an empty frame. As a result, although ICIC reduces interference, it also causes great waste of spectrum resources.

## SUMMARY

Embodiments of the present invention provide a power tuning method and a base station, in order to realize dynamic tuning of transmitted power of radio resources.

An embodiment of the present invention provides a power tuning method, including:

determining, by a first base station, power tuning information of a second cell according to a signal quality threshold and signal quality information of radio resources of the second cell; and

sending, by the first base station, the power tuning information of the second cell to a second base station, so that the second base station tunes transmitted power of the radio resources of the second cell according to the power tuning information;

where, the second cell is a neighboring cell of a first cell, the first cell is controlled by the first base station, and the second cell is controlled by the second base station.

An embodiment of the present invention also provides a power tuning method, including:

obtaining, by a second base station, signal quality information of radio resources of a second cell; and

determining, by the second base station, power tuning information of the second cell according to the signal quality information of the radio resources of the second cell and tuning transmitted power of the radio resources of the second cell according to the power tuning information;

where, the second cell is a neighboring cell of a first cell, the first cell is controlled by a first base station, and the second cell is controlled by the second base station.

An embodiment of the present invention also provides a base station, including:

a first processor, configured to determine power tuning information of a second cell according to a signal quality threshold and signal quality information of radio resources of the second cell; and

a transmitter, configured to send the power tuning information of the second cell determined by the first processor to a second base station, so that the second base station tunes transmitted power of the radio resources of the second cell according to the power tuning information, where, the second cell is a neighboring cell of a first cell, the first cell is controlled by a first base station, and the second cell is controlled by the second base station.

An embodiment of the present invention also provides a base station, including:

a receiver, configured to obtain signal quality information of radio resources of a second cell; and

a second processor, configured to determine power tuning information of the second cell according to the signal quality information of the radio resources of the second cell and tune transmitted power of the radio resources of the second cell according to the power tuning information, where, the second cell is a neighboring cell of a first cell, the first cell is controlled by a first base station, and the second cell is controlled by a second base station.

The embodiments of the present invention may realize dynamic tuning of transmitted power of radio resources and further reduce the waste of radio resources while reducing interference on neighboring cells.

## BRIEF DESCRIPTION OF DRAWINGS

To illustrate the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and persons of ordinary skill in the art may still derive other drawings from these accompanying drawings without creative efforts.

FIG. 1 is a flowchart of a power tuning method according to an embodiment of the present invention;
FIG. 2 is a flowchart of a power tuning method according to another embodiment of the present invention;
FIG. 3 is a flowchart of a power tuning method according to still another embodiment of the present invention;
FIG. 4 is a flowchart of a power tuning method according to still another embodiment of the present invention;
FIG. 5 is a schematic diagram of carrier-aggregated cells according to an embodiment of the present invention;
FIG. 6 is a schematic diagram of beam-formed cells according to an embodiment of the present invention;
FIG. 7 is a schematic diagram of a base station according to an embodiment of the present invention; and
FIG. 8 is a schematic diagram of a base station according to an embodiment of the present invention.

## DESCRIPTION OF EMBODIMENTS

To make the objectives, technical solutions, and advantages of the embodiments of the present invention more comprehensible, the following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by persons of ordinary skill in the art based on the embodiments of the present invention without creative efforts shall fall within the protection scope of the present invention.

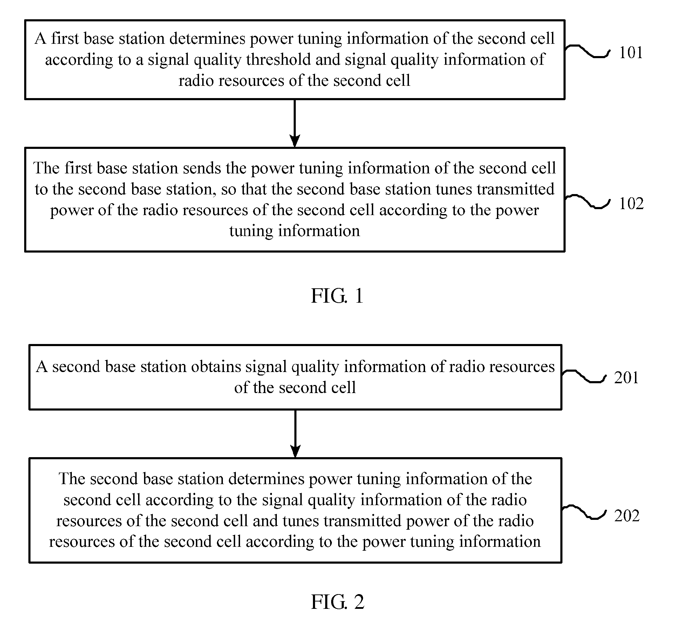

FIG. 1 is a flowchart of a power tuning method according to an embodiment of the present invention. In the embodiment, a first cell controlled by a first base station and a second cell controlled by a second base station are neighboring cells and the first cell is a serving cell of a first user equipment (UE 1). Optionally, when the first cell is a micro cell, the first base station is described as a base station serving the micro cell; when the second cell is a macro cell, the second cell is described as a neighboring macro cell of the micro cell and the second base station is described as a base station serving the macro cell. The embodiment of the present invention, however, is not limited to this.

As shown in FIG. 1, the power tuning method may include:

Step 101: The first base station determines power tuning information of the second cell according to a signal quality threshold and signal quality information of radio resources of the second cell.
Step 102: The first base station sends the power tuning information of the second cell to the second base station, so that the second base station tunes transmitted power of the radio resources of the second cell according to the power tuning information.

The foregoing embodiment may realize dynamic tuning of transmitted power of radio resources and further reduce the waste of radio resources while reducing interference on neighboring cells.

FIG. 2 is a flowchart of a power tuning method according to another embodiment of the present invention. In the embodiment, a first cell controlled by a first base station and a second cell controlled by a second base station are neighboring cells and the first cell is a serving cell of a first user equipment (UE 1). Optionally, when the first cell is a micro cell, the first base station is described as a base station serving the micro cell; when the second cell is a macro cell, the second cell is described as a neighboring macro cell of the micro cell and the second base station is described as a base station serving the macro cell. The embodiment of the present invention, however, is not limited to this.

As shown in FIG. 2, the power tuning method may include:

Step 201: The second base station obtains signal quality information of radio resources of the second cell.
Step 202: The second base station determines power tuning information of the second cell according to the signal quality information of the radio resources of the second cell and tunes transmitted power of the radio resources of the second cell according to the power tuning information.

The foregoing embodiment may realize dynamic tuning of transmitted power of radio resources and further reduce the waste of radio resources while reducing interference on neighboring cells.

The following describes the power tuning method provided in the present invention through an exemplary embodiment.

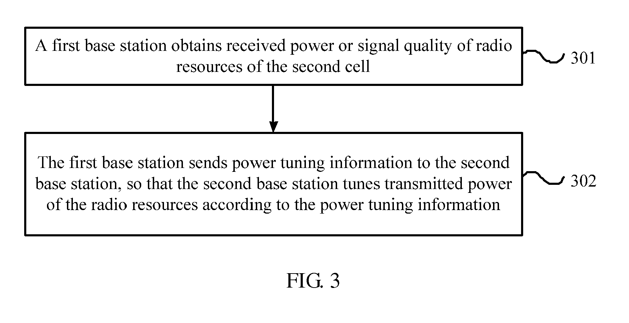

FIG. 3 is a flowchart of a power tuning method according to still another embodiment of the present invention. In the embodiment, a first cell controlled by a first base station and a second cell controlled by a second base station are neighboring cells and the first cell is a serving cell of a first user equipment (UE 1). Optionally, when the first cell is a micro cell, the first base station is described as a base station serving the micro cell; when the second cell is a macro cell, the second cell is described as a neighboring macro cell of the micro cell and the second base station is described as a base station serving the macro cell. The embodiment of the present invention, however, is not limited to this.

As shown in FIG. 3, the power tuning method may include:

Step 301: The first base station obtains received power or signal quality of radio resources of the second cell.
For example, the first base station measures the received power or signal quality of the radio resources of the second cell, thereby obtaining the measured value of the received power or signal quality of the radio resources. For another example, the first base station instructs UE 1 to measure the received power or signal quality of the radio resources of the second cell and receives the measured value of the received power or signal quality of the radio resources sent by UE 1 to the first base station.
Step 302: The first base station sends power tuning information to the second base station, so that the second base station tunes transmitted power of the radio resources according to the power tuning information. The power tuning information is sent by the first base station to the second base station through an X2, S1, or Uu interface (interface in the air or air interface for short) or through an operation support subsystem (Operation Support System, OSS).

In the embodiment, the two base stations send information through the Uu interface, and specifically, one base station sends information in the broadcast of a cell it controls and the other base station reads the broadcast to obtain the information, or the other base station receives the information reported by the UE after the UE reads the broadcast at the cell edge.

Optionally, the power tuning information is determined by the first base station according to a signal quality threshold and the obtained received power. For example, the first base station determines the power tuning information of the second cell according to the obtained received power, signal quality threshold, and total power of received signals of UE 1 or total downlink power ($P_{total}$) received by the first base station. It should be noted that the total downlink power received by the first base station in the embodiment of the present invention is the total power of downlink signals transmitted by other base stations (such as the second base station) and received by the first base station. Optionally, the power tuning information is determined by the first base station according to the signal quality threshold and the obtained signal quality. For example, the first base station determines the power tuning information of the second cell according to the obtained signal quality, signal quality threshold, and total power of received signals of UE 1 or total downlink power ($P_{total}$) received by the first base station.

In an alternative step of step 302, the first base station may send the obtained received power or signal quality to the second base station, so that the second base station determines the power tuning information and tunes the transmitted power of the radio resources according to the power tuning information. The received power or signal quality obtained by the second base station may be sent to the second base station by the first base station through an X2, S1, or Uu interface or through an OSS.

Optionally, the power tuning information is determined by the second base station according to the obtained received power or signal quality.

Optionally, the power tuning information is determined by the second base station according to the obtained received power and the signal quality threshold, or determined by the second base station according to the obtained signal quality and the signal quality threshold. For example, when the signal quality threshold is a reference signal received quality (Reference Signal Received Quality, RSRQ) threshold, the second base station determines the power tuning information according to the obtained received power, RSRQ threshold, total power of received signals of UE 1 or total downlink power ($P_{total}$) received by the first base station, and path loss from the second base station to UE 1, or the second base station determines the power tuning information according to the obtained signal quality, RSRQ threshold, total power of received signals of UE 1 or total downlink power ($P_{total}$) received by the first base station, and path loss from the second base station to UE 1. For another example, when the signal quality threshold is a signal to interference plus noise ratio (Signal to Interference plus Noise Ratio, SINR) threshold, the second base station may determine the power tuning information according to the obtained received power, SINR threshold, total power of received signals of UE 1 or total downlink power ($P_{total}$) received by the first base station, and path loss from the second base station to UE 1, or the second base station determines the power tuning information according to the obtained signal quality, SINR threshold, total power of received signals of UE 1 or total downlink power ($P_{total}$) received by the first base station, and path loss from the second base station to UE 1.

In the embodiment, the signal quality threshold may be obtained by the first base station or the second base station in advance and may be obtained in multiple manners. For example, the signal quality threshold may be configured by an operation support subsystem, or configured by an operator of the OSS or Operations, Administration and Maintenance (Operation Administration and Maintenance, OAM) system, or configured by the manufacturer of the base station. For another example, the signal quality threshold obtained by the first base station may be sent to the second base station by the first base station through an X2, S1, or Uu interface or through an OSS, and optionally, the first base station sends the signal quality threshold to the second base station together with the received power (or signal quality) obtained by the first base station, or the first base station sends the signal quality threshold to the second base station in a message without the received power (or signal quality) obtained by the first base station. For another example, the signal quality threshold obtained by the second base station may be sent to the first base station, which is not described herein. For details, reference may be made to the example in which the first base station sends the signal quality threshold to the second base station. For another example, the first base station and/or the second base station may use a default signal quality threshold. The embodiment does not limit how the first base station or the second base station obtains the signal quality threshold.

Optionally, the power tuning information in the embodiment may be a target value of power tuning or a code indicating the target value. The power tuning information may be an amplitude of power tuning or a code indicating the amplitude. For example, the amplitude of power tuning is an increase or decrease for power tuning. The power tuning information may be a grade of power tuning or a code indicating the grade, such as a high, middle, or low grade of power tuning. In addition, the power tuning information in the embodiment may be represented in other forms apart from the numeric value, code, and grade, provided that the receiver of the power tuning information can know the meaning definitely. The form of the power tuning information is not limited in the embodiment.

The radio resources in the embodiment may be time domain resources (such as ABS), or frequency domain resources (such as carriers, including primary and secondary carriers), or time-frequency resources (such as beams). The specific form of the radio resources is not limited in the embodiment.

In the embodiment, the first base station may send the power tuning information to the second base station after determining the power tuning information, so that the second base station tunes the transmitted power of the radio resources according to the power tuning information. The first base station may send all or a part of the parameters used to determine the power tuning information to the second base station, so that the second base station tunes the transmitted power of the radio resources according to the power tuning information. The embodiment of the present invention may realize dynamic tuning of transmitted power of radio resources and further reduce the waste of radio resources while reducing interference on neighboring cells, thereby increasing the utilization efficiency of resources. Further, the power tuning method provided in the embodiment is applicable to a self-organizing network (Self-planning Organized Network, SON). It realizes automatic dynamic tuning of power, which is quick and convenient and saves the cost required by manual tuning of power.

The following describes the power tuning method provided in the present invention through an exemplary embodiment.

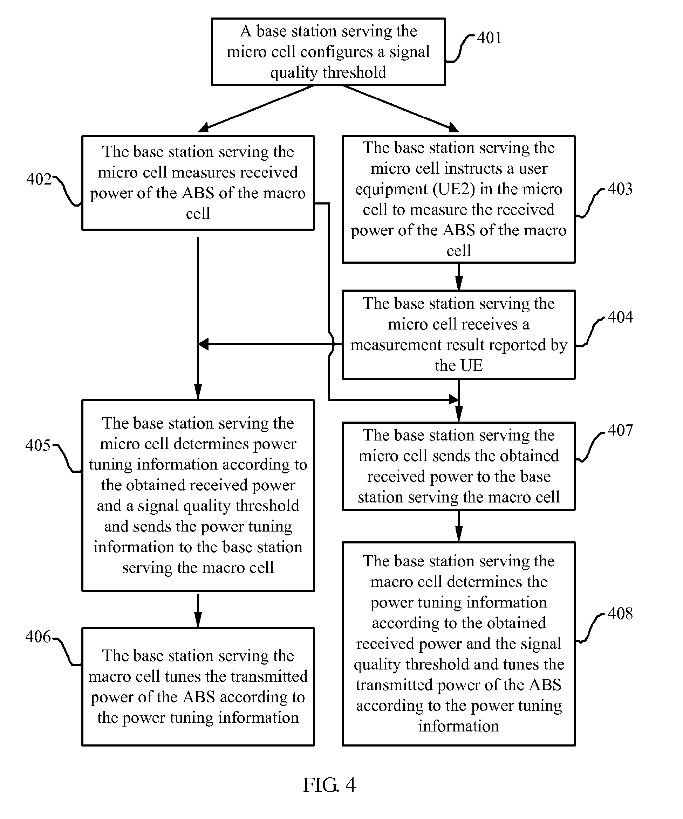

FIG. 4 is a flowchart of a power tuning method according to still another embodiment of the present invention, where, exemplarily, radio resources are ABS, a first base station is a base station serving a micro cell (a first cell), a second base station is a base station serving a macro cell (a second cell), and the macro cell is a neighboring cell of the micro cell. As shown in FIG. 4, the power tuning method may include:

Step 401: The base station serving the micro cell configures a signal quality threshold.

Optionally, the signal quality threshold may be configured by an OSS, or configured by an operator of the OSS/OAM system, or configured by the manufacturer of the base station serving the micro cell, which is not limited by the embodiment.

Optionally, the signal quality threshold may be an RSRQ threshold or SINR threshold.

Step 402: The base station serving the micro cell measures received power of the ABS of the macro cell.

After step 402, steps 405 and 406 are executed or steps 407 and 408 are executed.

Step 403: The base station serving the micro cell instructs a user equipment (UE 2) in the micro cell to measure the received power of the ABS of the macro cell. After step 403, step 404 is executed.

Step 404: The base station serving the micro cell receives a measurement result reported by the UE.

After step 404, steps 405 and 406 are executed or steps 407 and 408 are executed.

In the embodiment, step 402 and steps 403 to 404 are alternative and steps 405 to 406 and steps 407 to 408 are also alternative, which are not limited in the embodiment.

Step 405: The base station serving the micro cell determines power tuning information according to obtained received power (the measured received power of the ABS of the macro cell reported by the UE) and the signal quality threshold, and sends the power tuning information to the base station serving the macro cell. Or, the base station serving the micro cell determines power tuning information according to the obtained received power and the signal quality of the micro cell and sends the power tuning information to the base station serving the macro cell.

For example, the base station serving the micro cell may determine the power tuning information of the macro cell according to the obtained received power, signal quality threshold, and total power of received signals of the UE or total downlink power ($P_{total}$) received by the base station serving the micro cell. Then, the base station serving the micro cell may send the power tuning information to the base station serving the macro cell through an X2, S1, or Uu interface or through an OSS.

For another example, the base station serving the micro cell may determine the interference tolerance of the micro cell (represented by Rtolerance) according to a ratio of the obtained received power to the signal quality of the micro cell (for example, the received power obtained by the UE in the micro cell by measuring the micro cell). For example, if Rtolerance is higher than the threshold THP_CIHigh, the interference is great and the base station serving the micro cell considers that the base station serving the macro cell needs to reduce the transmitted power of downlink data of the ABS. If Rtolerance is lower than the threshold THP_CILow, the interference is small and the base station serving the micro cell considers that the base station serving the macro cell can raise the transmitted power of downlink data of the ABS. If Rtolerance is lower than THP_CIHigh and higher than THP_CILow, the interference is tolerable and the base station serving the micro cell considers that the base station serving the macro cell does not need to tune the transmitted power of downlink data of the ABS. Further, the base station serving the micro cell may determine the power tuning information through list query and send the power tuning information to the base station serving the macro cell. Optionally, power increasing and power decreasing may correspond to different lists or different parts in one list. It should be noted that the threshold THP_CIHigh and the threshold THP_CILow may be regarded as signal quality thresholds.

Step 406: The base station serving the macro cell tunes the transmitted power of the ABS according to the power tuning information.

Step 407: The base station serving the micro cell sends the obtained received power to the base station serving the macro cell.

For example, the base station serving the micro cell may send the obtained received power to the second base station through an X2, S1, or Uu interface or through an OSS.

Step 408: The base station serving the macro cell determines the power tuning information according to the obtained received power and the signal quality threshold and tunes the transmitted power of the ABS according to the power tuning information.

In the embodiment, the base station serving the micro cell and/or the second base station may obtain the signal quality threshold in multiple manners, which is not described herein. For details, reference may be made to the examples in the foregoing embodiment.

In addition, in step 407, the base station serving the micro cell may not send the obtained received power but determines the interference tolerance (represented by Rtolerance) of the micro cell according to a ratio of the obtained received power to the signal quality of the micro cell (for example, the received power obtained by the UE in the micro cell by measuring the micro cell), and sends a grade of power tuning to the base station serving the macro cell according to the Rtolerance. If Rtolerance is higher than the threshold THP_CIHigh, the grade of power tuning is high. If Rtolerance is lower than the threshold THP_CILow, the grade of power tuning is low. In step 408, the base station serving the macro cell determines the power tuning information according to the grade of power tuning and tunes the transmitted power of the ABS according to the power tuning information. For example, the base station serving the macro cell finds that the high grade of power tuning corresponds to -3 dB in the list, and therefore can determine that the power tuning information is -3 dB and reduce the power by 3 dB. For another example, the base station serving the macro cell finds that the low grade of power tuning corresponds to a range from 3 dB to 7 dB in the list, and therefore can determine that the power tuning information is 5 dB and raise the power by 5 dB.

In addition to the foregoing examples, the power tuning methods provided in the embodiments of the present invention may determine the power tuning information in the following manners. It should be noted that in the following description, exemplarily, the power tuning information is determined by the second base station. The first base station may adopt the same manner to determine the power tuning information, where the first base station obtains all parameter values needed to determine the power tuning information and determines the power tuning information according to equations. This is not described again hereinafter.

For example, it is assumed that the total received power is the total received power of UE 1. In a manner of determining the power tuning information in the embodiment, the signal quality threshold is an RSRQ threshold and the second base station determines the RSRQ on an ABS according to equation (1). Assuming that the power tuning information determined by the second base station for the ABS transmitted power is $P_{tolerance}$, it should be guaranteed that the RSRQ of the ABS is greater than the preset RSRQ threshold after the transmitted power is tuned. That is, it should be guaranteed that inequation (2) is established. In this case, the power tuning information needs to satisfy inequation (3).

$$RSRQ = RSRP_{serving}/(P_{macro} + P_{other} + P_{serving}) = RSRP_{serving}/P_{total} \qquad (1)$$

$$RSRP_{serving}/(P_{total} + P_{tolerance} \times PL) \geq RSRQ_{target} \qquad (2)$$

$$P_{tolerance} \leq [(RSRP_{serving}/RSRQ_{target}) - P_{total}]/PL \qquad (3)$$

If the $P_{tolerance}$ obtained from inequation (3) is a range or includes multiple possible $P_{tolerance}$ values, one value of $P_{tolerance}$ may be determined randomly or by other means as the power tuning information.

$RSRP_{serving}$ represents the reference signal received power (RSRQ) of the first cell, which is the received power obtained by the first base station. $P_{total}$ represents the total power of received signals of the UE in the first cell (the foregoing UE 1 or UE 2) (for example, obtained by the first base station by performing measurement or receiving a measurement result reported by the UE). $RSRQ_{target}$ represents the RSRQ threshold. PL represents the path loss (Pathloss) from the second base station to the UE in the first cell. For example, PL may be obtained in the following manner: First, one or more than one PL value corresponding to the location of the UE is determined according to equation (4), and if there are multiple PL values, one PL value is determined according to the multiple PL values. For example, any one or a mean value of the PL values is taken.

$$PL = \text{Received power obtained by the first base station/Transmitted power of the second base station} \qquad (4)$$

The determination of PL may be executed by the first base station, in which case, the first base station may first obtain the transmitted power information of the second base station from the second base station. The determination of PL may also be executed by the second base station, in which case, the first base station first sends the received power obtained by the first base station (such as the received power measured and reported by the UE) to the second base station. Optionally, the transmitted power information of the second base station may be sent by the second base station to the first base station through an X2, S1, or Uu interface, or through an OSS. The received power obtained by the first base station may be sent by the first base station to the second base station through an X2, S1, or Uu interface, or through an OSS.

For example, it is assumed that the total received power is the total received power of UE 1. In a manner of determining the power tuning information in the embodiment, the signal quality threshold is an SINR threshold and the second base station determines the SINR on the ABS according to equation (5). Assuming that the power tuning information determined by the second base station for the ABS transmitted power is $P_{tolerance}$, it should be guaranteed that the SINR is greater than the preset SINR threshold after the transmitted power is tuned. That is, it should be guaranteed that inequation (6) is established. In this case, the power tuning information needs to satisfy inequation (7).

$$SINR = P_{serving}/(P_{total} - P_{serving}) \qquad (5)$$

$$P_{serving}/(P_{total} - P_{serving} + P_{tolerance} \times PL) \geq SINR_{target} \qquad (6)$$

$$P_{tolerance} \leq [(P_{serving}/SINR_{target}) - P_{total} + P_{serving}]/PL \qquad (7)$$

$RSRP_{serving}$ represents the reference signal received power (RSRQ) of the first cell, which is the received power obtained by the first base station. $P_{total}$ represents the total power of received signals of the UE in the first cell (the foregoing UE 1 or UE 2) (for example, obtained by the first base station by performing measurement or receiving a measurement result reported by the UE). $SINR_{target}$ represents the SINR threshold. PL represents the path loss from the second base station to the UE in the first cell. The manner of obtaining PL is described in the foregoing examples and is not described herein again.

For another example, in a manner of determining the power tuning information in the embodiment, the signal quality threshold is a reference signal received power threshold (represented by TH) of the second cell controlled by the second base station, which is received by the UE in the first cell. The received power obtained by the second base station includes the reference signal received signal. A process in which the second base station determines the power tuning information according to the obtained received power and the signal quality threshold may be as follows: First, the second base station determines the path loss (represented by PL) from the second base station to the UE in the first cell according to the obtained reference signal received power and the reference signal transmitted power, for example, a ratio of the obtained reference signal received power to the reference signal transmitted power is used as the PL. The manner of obtaining PL is described in the foregoing examples and is not described herein again. Then, the second base station may determine maximum transmitted power PMAX according to the reference signal received signal threshold TH provided by the first cell and the path loss PL from the second base station to the UE in the first cell, for example, the value of TH/PL is used as PMAX. Finally, the second base station determines the power tuning information (represented by $P_{tolerance}$) according to PMAX and previously used transmitted power (the transmitted power used at a time point is expressed as P0), for example, the difference between PMAX and P0 is used as $P_{tolerance}$.

The foregoing embodiment provides an optimized tuning mechanism for transmitting data in the ABS in low power mode. It reduces interference on a neighboring cell, reduces the waste of spectrum resources, and increases the spectrum efficiency by dynamically tuning the transmitted power of the ABS when data is transmitted in the ABS in low power mode. Further, the power tuning method is applicable to SONs, where automatic dynamic tuning of power is realized, which is quick and convenient and saves the cost required by manual tuning of power.

The embodiment of the present invention shown in FIG. 4 is described where the radio resources are the ABS but the present invention is not limited to this. The power tuning method provided in the embodiment of the present invention is also applicable to scenarios of carrier aggregation) or beam forming. In the following description, the radio resources are carriers or beams.

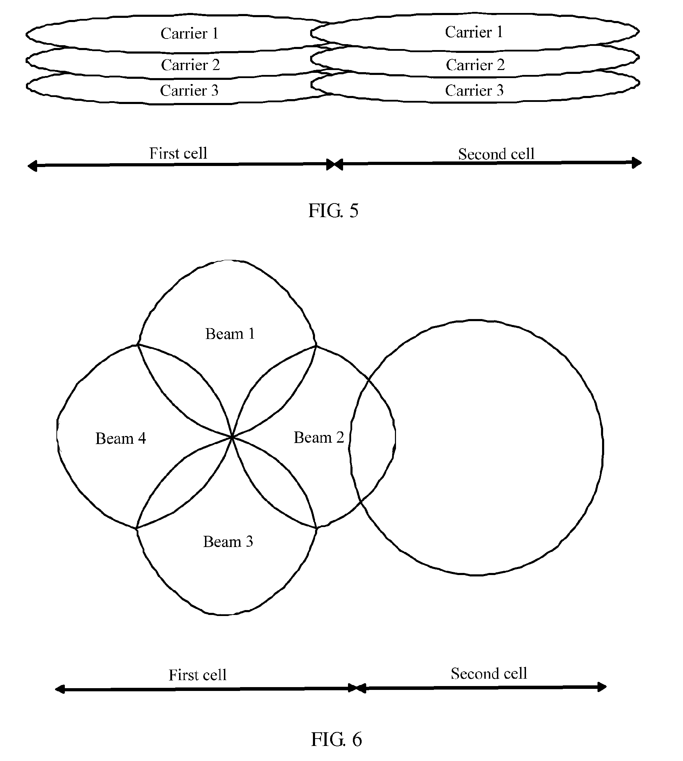

In a carrier aggregation scenario, one cell consists of multiple carriers working at different frequencies. Taking a 3-carrier cell as an example, a structure of carrier-aggregated cells is shown in FIG. 5 which is a schematic diagram of carrier-aggregated cells provided in an embodiment of the present invention.

In FIG. 5, the first cell includes three carriers, carrier 1, carrier 2, and carrier 3. The interference on the second cell may be regarded as coming from one carrier (for example, carrier 3). The power tuning of each carrier may be implemented by adopting the multiple methods and examples described in the foregoing embodiment, so that automatic dynamic tuning of power in an SON is realized. Taking carrier 3 as an example, the parameter values related to the power tuning method provided in the foregoing embodiment, such as RSRP, RSRQ, or SINR, are no longer ABS measurement results but measurement results of carrier 3In the scenario shown in FIG. 5, measurement should be performed respectively for carrier 1, carrier 2, and carrier 3 or measurement results thereof should be obtained respectively, so as to determine the power tuning information and implement power tuning.

In a beam forming (Beam Forming) scenario, a cell is always made up of multiple beams (beams). A Beam is a combination of time and frequency multiplexing. FIG. 6 is a schematic diagram of beam-formed cells according to an embodiment of the present invention. As shown in FIG. 6, the first cell and the second cell are neighboring cells. Four beams constituted at time t and frequency f in the first cell are as follows:

Beam1: (t1, f1); (t2, f2); (t3, f3); (t4, f4);
Beam2: (t1, f2); (t2, f3); (t3, f4); (t4, f1);
Beam3: (t1, f3); (t2, f4); (t3, f1); (t4, f2);
Beam4: (t1, f4); (t2, f1); (t3, f2); (t4, f3);

For the beam forming of the first cell, the second cell can know the time-frequency status of Beam configurations in the first cell in advance. After a UE at the edge of the second cell performs measurement on (tx, fx) to obtain measurement results such as the RSRP, RSRQ, and/or SINR, the base station serving the second cell can know, according to the early known time-frequency status of Beam configurations in the first cell, the Beam corresponding to the RSRP, RSRQ, or SINR measured by the UE at the edge of the second cell. Then, the methods and examples provided in the foregoing embodiment may be used to realize tuning of Beam power according to an automatic tuning mechanism in an SON.

Persons of ordinary skill in the art may understand that all or a part of the steps in the methods of the embodiments can be implemented by hardware under the instruction of a program. The program may be stored in a computer readable storage medium and when the program is executed, the steps in the methods of the embodiments are executed. The foregoing storage medium includes any medium that can store program codes, such as a ROM, a RAM, a magnetic disk, or a CD-ROM.

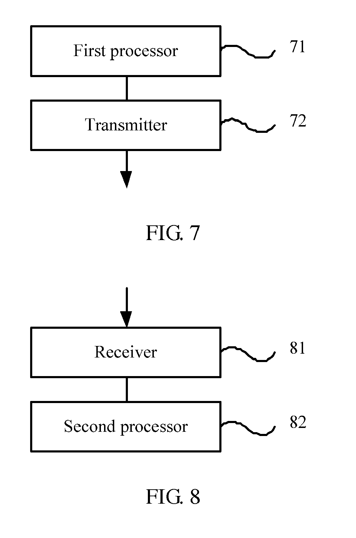

FIG. 7 is a schematic diagram of a base station (the first base station hereinafter) according to an embodiment of the present invention, where the first base station can implement the actions executed by the first base station in the power tuning methods provided in the foregoing embodiments. As shown in FIG. 7, the first base station may include:

a first processor 71, configured to determine power tuning information of a second cell according to a signal quality threshold and signal quality information of radio resources of the second cell; and

a transmitter 72, configured to send the power tuning information of the second cell determined by the first processor 71 to the second base station, so that the second base station tunes transmitted power of the radio resources of the second cell according to the power tuning information, where a first cell controlled by the first base station and the second cell controlled by the second base station are neighboring cells. Optionally, when the first cell is a micro cell, the first base station is described as a base station serving the micro cell; when the second cell is a macro cell, the second cell is described as a neighboring macro cell of the micro cell and the second base station is described as a base station serving the macro cell. The embodiment of the present invention, however, is not limited to this.

In the embodiment, the first processor 71 may determine the power tuning information of the second cell according to the signal quality information of the radio resources of the second cell, the signal quality threshold, total power of received signals of a user equipment, and path loss from the second base station to the user equipment, where a serving cell of the user equipment is the first cell; or the first processor 71 may determine the power tuning information of the second cell according to the signal quality information of the radio resources of the second cell, the signal quality threshold, total downlink power received by the first base station, and path loss from the second base station to the user equipment, where a serving cell of the user equipment is the first cell.

The path loss from the second base station to the user equipment is determined by the first processor 71 according to transmitted power information of the second base station and received power of the radio resources of the second cell, where the transmitted power information of the second base station is sent by the second base station to the first base station through an X2, S1, or Uu interface, or through an OSS; or the path loss from the second base station to the user equipment is determined by the second base station according to transmitted power information of the second base station and received power of the radio resources of the second cell, where the received power of the radio resources of the second cell is sent by the first base station to the second base station through an X2, S1, or Uu interface, or through an OSS.

In the embodiment, the signal quality information of the radio resources of the second cell includes the received power of the radio resources of the second cell or a measured value of signal quality of the radio resources of the second cell.

The signal quality information of the radio resources of the second cell is a measurement result obtained by the first base station by measuring the second cell; or the signal quality information of the radio resources of the second cell is a measurement result sent by a user equipment to the first base station after the user equipment measures the second cell according to an instruction of the first base station, where a serving cell of the user equipment is the first cell.

The signal quality threshold is a reference signal received power threshold, or a reference signal received quality threshold, or a signal to interference plus noise ratio threshold.

In the embodiment, the first processor 71 may determine the power tuning information of the second cell according to the signal quality threshold and a ratio of the signal quality information of the radio resources of the second cell to signal quality of the first cell; or the first processor 71 may, when the signal quality threshold is a reference signal received power threshold and the signal quality information is reference signal received power, determine the power tuning information of the second cell according to the reference signal received power threshold, the reference signal received power, reference signal transmitted power, and previously used transmitted power.

The transmitter 72 may send the power tuning information of the second cell to the second base station through an X2, S1, or Uu interface or through an OSS.

In the embodiment, the power tuning information may include any one of the following items:

a target value of power tuning or a code indicating the target value; or
an amplitude of power tuning or a code indicating the amplitude; or

a grade of power tuning or a code indicating the grade.

The radio resource in the embodiment may include any one of almost blank subframes, carriers, and beams.

The foregoing first base station may realize dynamic tuning of transmitted power of radio resources and further reduce the waste of radio resources while reducing interference on neighboring cells.

FIG. 8 is a schematic diagram of a base station (the second base station hereinafter) according to an embodiment of the present invention, where the second base station can implement the actions executed by the second base station in the power tuning method provided in the foregoing embodiments. As shown in FIG. 8, the second base station may include:

a receiver 81, configured to obtain signal quality information of radio resources of a second cell; and
a second processor 82, configured to determine power tuning information of the second cell according to the signal quality information of the radio resources of the second cell and tune transmitted power of the radio resources of the second cell according to the power tuning information, where a first cell controlled by a first base station and the second cell controlled by the second base station are neighboring cells. Optionally, when the first cell is a micro cell, the first base station is described as a base station serving the micro cell; when the second cell is a macro cell, the second cell is described as a neighboring macro cell of the micro cell and the second base station is described as a base station serving the macro cell. The embodiment of the present invention, however, is not limited to this.

Specifically, the second processor 82 may determine the power tuning information of the second cell according to the signal quality information of the radio resources of the second cell, a signal quality threshold, total power of received signals of a user equipment, and path loss from the second base station to the user equipment, where a serving cell of the user equipment is the first cell; or the second processor 82 may determine the power tuning information of the second cell according to the signal quality information of the radio resources of the second cell, a signal quality threshold, total downlink power received by the first base station, and path loss from the second base station to the user equipment, where a serving cell of the user equipment is the first cell.

In the embodiment, the path loss from the second base station to the user equipment is determined by the first base station according to transmitted power information of the second base station and received power of the radio resources of the second cell, where the transmitted power information of the second base station is sent by the second base station to the first base station through an X2, S1, or Uu interface, or through an OSS; or the path loss from the second base station to the user equipment is determined by the second base station according to transmitted power information of the second base station and received power of the radio resources of the second cell, where the received power of the radio resources of the second cell is sent by the first base station to the second base station through an X2, S1, or Uu interface, or through an OSS.

In the embodiment, the signal quality information of the radio resources of the second cell may include the received power of the radio resources of the second cell or a measured value of signal quality of the radio resources of the second cell.

Specifically, the signal quality information of the radio resources of the second cell is a measurement result sent by the first base station to the second base station after the first base station measures the second cell; or the signal quality information of the radio resources of the second cell is a measurement result sent by the user equipment to the second base station through the first base station after the user equipment measures the second cell according to an instruction of the first base station, where a serving cell of the user equipment is the first cell.

The signal quality threshold may be a reference signal received power threshold, or a reference signal received quality threshold, or a signal to interference plus noise ratio threshold.

In the embodiment, the second processor 82 may determine the power tuning information of the second cell according to the signal quality threshold and a ratio of the signal quality information of the radio resources of the second cell to signal quality of the first cell; or the second processor 82 may, when the signal quality threshold is a reference signal received power threshold and the signal quality information is reference signal received power, determine the power tuning information of the second cell according to the reference signal received power threshold, the reference signal received power, reference signal transmitted power, and previously used transmitted power.

In the embodiment, the receiver 81 may receive the signal quality of the first cell sent by the first base station through an X2, S1, or Uu interface or through an OSS.

In the embodiment, the power tuning information may include any one of the following items:

a target value of power tuning or a code indicating the target value; or
an amplitude of power tuning or a code indicating the amplitude; or
a grade of power tuning or a code indicating the grade.

The radio resources in the embodiment may include any one of almost blank subframes, carriers, and beams.

The foregoing second base station may realize dynamic tuning of transmitted power of radio resources and further reduce the waste of radio resources while reducing interference on neighboring cells.

A person skilled in the art may understand that the accompanying drawings are schematic drawings of one exemplary embodiment and that the modules or procedures in the accompanying drawings are not necessarily compulsory in implementing the present invention.

A person skilled in the art may understand that the modules of one apparatus in an embodiment may be distributed in the apparatus according to the description of the embodiment or disposed in one or more apparatuses different from the embodiment. The modules in the embodiment may be integrated into one module or further split to several submodules.

Finally, it should be noted that the foregoing embodiments are merely intended for describing the technical solutions of the present invention other than limiting the present invention. Although the present invention is described in detail with reference to the foregoing embodiments, persons of ordinary skill in the art should understand that they may still make modifications to the technical solutions described in the foregoing embodiments, or make equivalent replacements to some technical features thereof, without departing from the scope of the technical solutions of the embodiments of the present invention.

**Claims**

1. A power tuning method, comprising:

   determining, by a first base station, power tuning information of a second cell according to a signal quality threshold and signal quality information of radio resources of the second cell; and
   sending, by the first base station, the power tuning information of the second cell to a second base station, so that the second base station tunes transmitted power of the radio resources of the second cell according to the power tuning information;
   wherein, the second cell is a neighboring cell of a first cell, the first cell is controlled by the first base station, and the second cell is controlled by the second base station.

2. The method according to claim 1, wherein the determining, by a first base station, power tuning information of a second cell according to a signal quality threshold and signal quality information of radio resources of the second cell comprises:

   determining, by the first base station, the power tuning information of the second cell according to the signal quality information of the radio resources of the second cell, a signal quality threshold of the first cell, total power of received signals of a user equipment, and path loss from the second base station to the user equipment, wherein a serving cell of the user equipment is the first cell; or
   determining, by the first base station, the power tuning information of the second cell according to the signal quality information of the radio resources of the second cell, the signal quality threshold, total downlink power received by the first base station, and path loss from the second base station to the user equipment, wherein a serving cell of the user equipment is the first cell.

3. The method according to claim 2, wherein:

   the path loss from the second base station to the user equipment is determined by the first base station according to transmitted power information of the second base station and received power of the radio resources of the second cell, wherein the transmitted power information of the second base station is sent by the second base station to the first base station through an X2, S1, or Uu interface or through an operation support subsystem; or
   the path loss from the second base station to the user equipment is determined by the second base station according to transmitted power information of the second base station and received power of the radio resources of the second cell, wherein the received power of the radio resources of the second cell is sent by the first base station to the second base station through an X2, S1, or Uu interface or through an operation support subsystem.

4. The method according to any one of claims 1 to 3, wherein the signal quality information of the radio resources of the second cell comprises: the received power of the radio resources of the second cell or a measured value of signal quality of the radio resources of the second cell.

5. The method according to claim 4, wherein:

the signal quality information of the radio resources of the second cell is a measurement result obtained by the first base station by measuring the second cell; or
the signal quality information of the radio resources of the second cell is a measurement result sent by the user equipment to the first base station after the user equipment measures the second cell according to an instruction of the first base station, wherein the serving cell of the user equipment is the first cell.

6. The method according to claim 4, wherein the signal quality threshold is a received power threshold, or a reference signal received quality threshold, or a signal to interference plus noise ratio threshold.

7. The method according to claim 1, wherein the determining, by a first base station, power tuning information of a second cell according to a signal quality threshold and signal quality information of radio resources of the second cell comprises:

determining, by the first base station, the power tuning information of the second cell according to the signal quality threshold and a ratio of the signal quality information of the radio resources of the second cell to signal quality of the first cell; or
when the signal quality threshold is a reference signal received power threshold and the signal quality information is reference signal received power, determining, by the first base station, the power tuning information of the second cell according to the reference signal received power threshold, the reference signal received power, reference signal transmitted power, and previously used transmitted power.

8. The method according to claim 1 or 2, wherein:

the power tuning information of the second cell is sent by the first base station to the second base station through an X2, S1,or Uu interface, or through an operation support subsystem.

9. The method according to claim 8, wherein the power tuning information comprises any one of the following items:

a target value of power tuning or a code indicating the target value; or
an amplitude of power tuning or a code indicating the amplitude; or
a grade of power tuning or a code indicating the grade.

10. The method according to any one of claims 1 to 9, wherein the radio resources comprise any one of almost blank subframes, carriers, and beams.

11. A power tuning method, comprising:

obtaining, by a second base station, signal quality information of radio resources of a second cell; and
determining, by the second base station, power tuning information of the second cell according to the signal quality information of the radio resources of the second cell and tuning transmitted power of the radio resources of the second cell according to the power tuning information;
wherein, the second cell is a neighboring cell of a first cell, the first cell is controlled by a first base station, and the second cell is controlled by the second base station.

12. The method according to claim 11, wherein the determining, by the second base station, power tuning information of the second cell according to the signal quality information of the radio resources of the second cell comprises:

determining, by the second base station, the power tuning information of the second cell according to the signal quality information of the radio resources of the second cell, a signal quality threshold, total received power of a user equipment, and path loss from the second base station to the user equipment, wherein a serving cell of the user equipment is the first cell; or
determining, by the second base station, the power tuning information of the second cell according to the signal quality information of the radio resources of the second cell, a signal quality threshold, total downlink power received by the first base station, and path loss from the second base station to the user equipment, wherein a serving cell of the user equipment is the first cell.

**13.** The method according to claim 12, wherein:

the path loss from the second base station to the user equipment is determined by the first base station according to transmitted power information of the second base station and received power of the radio resources of the second cell, wherein the transmitted power information of the second base station is sent by the second base station to the first base station through an X2, S1, or Uu interface or through an operation support subsystem; or the path loss from the second base station to the user equipment is determined by the second base station according to transmitted power information of the second base station and received power of the radio resources of the second cell, wherein the received power of the radio resources of the second cell is sent by the first base station to the second base station through an X2, S1, or Uu interface or through an operation support subsystem.

**14.** The method according to any one of claims 11 to 13, wherein the signal quality information of the radio resources of the second cell comprises: the received power of the radio resources of the second cell or a measured value of signal quality of the radio resources of the second cell.

**15.** The method according to claim 14, wherein:

the signal quality information of the radio resources of the second cell is a measurement result sent by the first base station to the second base station after the first base station measures the second cell; or the signal quality information of the radio resources of the second cell is a measurement result sent by the user equipment to the second base station through the first base station after the user equipment measures the second cell according to an instruction of the first base  station, wherein the serving cell of the user equipment is the first cell.

**16.** The method according to claim 14, wherein the signal quality threshold is a received power threshold, or a reference signal received quality threshold, or a signal to interference plus noise ratio threshold.

**17.** The method according to claim 11, wherein the determining, by the second base station, power tuning information of the second cell according to the signal quality information of the radio resources of the second cell comprises:

determining, by the second base station, the power tuning information of the second cell according to a signal quality threshold and a ratio of the signal quality information of the radio resources of the second cell to signal quality of the first cell; or when a signal quality threshold is a reference signal received power threshold and the signal quality information is reference signal received power, determining, by the second base station, the power tuning information of the second cell according to the reference signal received power threshold, the reference signal received power, reference signal transmitted power, and previously used transmitted power.

**18.** The method according to claim 17, wherein the signal quality of the first cell is sent by the first base station to the second base station through an X2, S1, or Uu interface or through an operation support subsystem.

**19.** The method according to claim any one of claims 11 to 18, wherein the power tuning information comprises any one of the following items:

a target value of power tuning or a code indicating the target value; or an amplitude of power tuning or a code indicating the amplitude; or a grade of power tuning or a code indicating the grade.

**20.** The method according to any one of claims 11 to 19, wherein the radio resources comprise any one of almost blank subframes, carriers, and beams.

**21.** A base station, comprising:

a first processor, configured to determine power tuning information of a second cell according to a signal quality threshold and signal quality information of radio resources of the second cell; and a transmitter, configured to send the power tuning information of the second cell determined by the first processor to a second base station, so that the second base station tunes transmitted power of the radio resources of the second cell according to the power tuning information, wherein, the second cell is a neighboring cell of a first cell, the first cell is controlled by a first base station, and the second cell is controlled by the second base station.

22. The base station according to claim 21, wherein:

the first processor is specifically configured to determine the power tuning information of the second cell according to the signal quality information of the radio resources of the second cell, the signal quality threshold, total received power of a user equipment, and path loss from the second base station to the user equipment, wherein a serving cell of the user equipment is the first cell; or the first processor is specifically configured to determine the power tuning information of the second cell according to the signal quality information of the radio resources of the second cell, the signal quality threshold, total downlink power received by the first base station, and path loss from the second base station to the user equipment, wherein a serving cell of the user equipment is the first cell.

23. The base station according to claim 21, wherein:

the first processor is specifically configured to determine the power tuning information of the second cell according to the signal quality threshold and a ratio of the signal quality information of the radio resources of the second cell to signal quality of the first cell; or the first processor is specifically configured to, when the signal quality threshold is a reference signal received power threshold and the signal quality information is reference signal received power, determine the power tuning information of the second cell according to the reference signal received power threshold, the reference signal received power, reference signal transmitted power, and previously used transmitted power.

24. The base station according to claim 21 or 22, wherein:

the transmitter is specifically configured to send the power tuning information of the second cell to the second base station through an X2, S1,or Uu interface or through an operation support subsystem.

25. A base station, comprising:

a receiver, configured to obtain signal quality information of radio resources of a second cell; and
a second processor, configured to determine power tuning information of the second cell according to the signal quality information of the radio resources of the second cell and tune transmitted power of the radio resources of the second cell according to the power tuning information, wherein, the second cell is a neighboring cell of a first cell, the first cell is controlled by a first base station, and the second cell is controlled by a second base station.

26. The base station according to claim 25, wherein:

the second processor is specifically configured to determine the power tuning information of the second cell according to the signal quality information of the radio resources of the second cell, a signal quality threshold, total received power of a user equipment, and path loss from the second base station to the user equipment, wherein a serving cell of the user equipment is the first cell; or the second processor is specifically configured to determine the power tuning information of the second cell according to the signal quality information of the radio resources of the second cell, a signal quality threshold, total downlink power received by the first base station, and path loss from the second base station to the user equipment, wherein a serving cell of the user equipment is the first cell.

27. The base station according to claim 25, wherein:

the second processor is specifically configured to determine the power tuning information of the second cell according to a signal quality threshold and a ratio of the signal quality information of the radio resources of the second cell to signal quality of the first cell; or the second processor is specifically configured to, when a signal quality threshold is a reference signal received power threshold and the signal quality information is reference signal received power, determine the power tuning information of the second cell according to the reference signal received power threshold, the reference signal received power, reference signal transmitted power, and previously used transmitted power.

**28.** The base station according to claim 27, wherein:

the receiver is specifically configured to receive the signal quality of the first cell sent by the first base station through an X2, S1, or Uu interface or through an operation support subsystem.

A first base station determines power tuning information of the second cell according to a signal quality threshold and signal quality information of radio resources of the second cell 〜 101

The first base station sends the power tuning information of the second cell to the second base station, so that the second base station tunes transmitted power of the radio resources of the second cell according to the power tuning information 〜 102

FIG. 1

A second base station obtains signal quality information of radio resources of the second cell 〜 201

The second base station determines power tuning information of the second cell according to the signal quality information of the radio resources of the second cell and tunes transmitted power of the radio resources of the second cell according to the power tuning information 〜 202

FIG. 2

| A first base station obtains received power or signal quality of radio resources of the second cell | ~✓ 301 |

The first base station sends power tuning information to the second base station, so that the second base station tunes transmitted power of the radio resources according to the power tuning information | ~✓ 302

FIG. 3

A base station serving the micro cell configures a signal quality threshold — 401

The base station serving the micro cell measures received power of the ABS of the macro cell — 402

The base station serving the micro cell instructs a user equipment (UE2) in the micro cell to measure the received power of the ABS of the macro cell — 403

The base station serving the micro cell receives a measurement result reported by the UE — 404

The base station serving the micro cell determines power tuning information according to the obtained received power and a signal quality threshold and sends the power tuning information to the base station serving the macro cell — 405

The base station serving the micro cell sends the obtained received power to the base station serving the macro cell — 407

The base station serving the macro cell tunes the transmitted power of the ABS according to the power tuning information — 406

The base station serving the macro cell determines the power tuning information according to the obtained received power and the signal quality threshold and tunes the transmitted power of the ABS according to the power tuning information — 408

FIG. 4

| Carrier 1 | Carrier 1 |
| Carrier 2 | Carrier 2 |
| Carrier 3 | Carrier 3 |

First cell · Second cell

FIG. 5

Beam 1

Beam 4 · Beam 2

Beam 3

First cell · Second cell

FIG. 6

First processor    71

Transmitter    72

FIG. 7

Receiver    81

Second processor    82

FIG. 8

# INTERNATIONAL SEARCH REPORT

| | International application No. |
|---|---|
| | **PCT/CN2012/073370** |

**A. CLASSIFICATION OF SUBJECT MATTER**

H04W 52/04 (2009.01) i

According to International Patent Classification (IPC) or to both national classification and IPC

**B. FIELDS SEARCHED**

Minimum documentation searched (classification system followed by classification symbols)

IPC: H04W; H04L; H04B; H04Q

Documentation searched other than minimum documentation to the extent that such documents are included in the fields searched

Electronic data base consulted during the international search (name of data base and, where practicable, search terms used)

CPRSABS, CNTXT, CNKI: power, adjust, control, base station, neighbor, neighbouring cell, interference, send, transmit

VEN: power, adjust, control, base station, neighbor, cell, interference, send, transmit

**C. DOCUMENTS CONSIDERED TO BE RELEVANT**

| Category* | Citation of document, with indication, where appropriate, of the relevant passages | Relevant to claim No. |
|---|---|---|
| X | CN 101820683 A (ZTE CORP.), 01 September 2010 (01.09.2010), description, paragraphs [0011] and [0080], and figure 1b | 1-10, 21-24 |
| X | CN 101707795 A (CHONGQING CYIT COMMUNICATION TECHNOLOGIES CO., LTD.), 12 May 2010 (12.05.2010), description, paragraphs [0021]-[0031], and figure 2 | 11-20, 25-28 |
| A | CN 101192871 A (BEIJING SAMSUNG COMMUNICATION TECHNOLOGY RESEARCH INSTITUTE et al.), 04 June 2008 (04.06.2008), the whole document | 1-28 |

☐ Further documents are listed in the continuation of Box C.    ☒ See patent family annex.

| *   Special categories of cited documents: | "T"   later document published after the international filing date or priority date and not in conflict with the application but cited to understand the principle or theory underlying the invention |
|---|---|
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
|---|---|
| 11 June 2012 (12.06.2012) | **28 June 2012 (28.06.2012)** |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **MEN, Xiaojin** Telephone No.: (86-10) **62411441** |
|---|---|

Form PCT/ISA/210 (second sheet) (July 2009)

## INTERNATIONAL SEARCH REPORT
### Information on patent family members

| | International application No. |
|---|---|
| | **PCT/CN2012/073370** |

| Patent Documents referred in the Report | Publication Date | Patent Family | Publication Date |
|---|---|---|---|
| CN 101820683 A | 01.09.2010 | WO 2010096985 A1 | 02.09.2010 |
| CN 101707795 A | 12.05.2010 | None | |
| CN 101192871 A | 04.06.2008 | None | |

Form PCT/ISA/210 (patent family annex) (July 2009)

## REFERENCES CITED IN THE DESCRIPTION

**Patent documents cited in the description**

• CN 201110086878